# FASCICULE DE BREVET EUROPEEN

(11) **EP 2 723 211 B1**
(45) Date de publication et mention de la délivrance du brevet: **09.03.2016**
(21) Numéro de dépôt: 12734983.5
(22) Date de dépôt: 20.06.2012
(51) Int. Cl.: A45D 40/16

(54) **PROCÉDÉ POUR FIXER UN BÂTON DE ROUGE A LÈVRES DANS UN DISTRIBUTEUR DE ROUGE A LÈVRES ET MACHINE CORRESPONDANTE**
VERFAHREN ZUR BEFESTIGUNG EINES LIPPENSTIFTES AN EINEM LIPPENSTIFTSPENDER UND ENTSPRECHENDE MASCHINE
METHOD FOR ATTACHING LIPSTICK TO A LIPSTICK DISPENSER, AND CORRESPONDING MACHINE

(30) Priorité: 22.06.2011 FR 1155510
(43) Date de publication de la demande: 30.04.2014
(73) Titulaire: PARFUMS CHRISTIAN DIOR, 75008 Paris (FR)
(72) Inventeur: LEBERT, Jean-Jocelyn, 45430 Checy (FR)
(74) Mandataire: Cabinet Plasseraud
(86) Numéro de dépôt international: PCT/FR2012/051400
(87) Numéro de publication internationale: WO 2012/175875

(56) Documents cités:
- EP-A1- 1 437 062
- WO-A2-02/066331
- DE-C- 900 544
- FR-A1- 2 729 278

## Description

### DOMAINE DE L'INVENTION :

L'invention concerne le domaine des procédés et des machines pour fixer un bâton de rouge à lèvres dans un distributeur de rouge à lèvres.

### ETAT DE LA TECHNIQUE :

Un bâton de rouge à lèvres est traditionnellement constitué d'une pâte de produit cosmétique susceptible de se déposer par frottement sur les lèvres d'une utilisatrice. L'extrémité du bâton qui est portée aux lèvres présente généralement un profil adapté. L'extrémité opposée du bâton est souvent emmanchée dans un réceptacle du distributeur. Le réceptacle est parfois appelé « cupule », le bâton de rouge à lèvres est appelé « raisin », le procédé de fixation du raisin dans la cupule est appelé « piquage » du raisin.

Dans le cas d'un bâton de rouge à lèvres à pâte molle, l'emmanchement nécessite de prendre appui sur l'extrémité destinée aux lèvres de l'utilisatrice. L'effort exercé pour l'emmanchement peut déformer cette extrémité, ce qui n'est pas souhaitable.

Dans le cas d'un bâton de rouge à lèvres à pâte dure, l'emmanchement peut s'accompagner d'une variation de position du bâton de rouge à lèvres par rapport au distributeur, ce qui n'est pas souhaitable.

Ainsi, DE 900 544 prévoit d'injecter un flux d'air comprimé pour propulser le bâton jusqu'à l'emmanchement.

### OBJET ET RESUME DE L'INVENTION :

L'invention a notamment pour but de remédier à au moins l'un des inconvénients précités.

Selon un premier aspect, l'invention porte sur un procédé pour fixer un bâton de rouge à lèvres dans un distributeur, le bâton comprenant une extrémité distale destinée aux lèvres, le distributeur comprenant un réceptacle présentant une ouverture d'introduction ajustée à une extrémité proximale du bâton. Le procédé comprend :
- une étape d'amenée dans laquelle on amène l'ouverture d'introduction et l'extrémité proximale du bâton au voisinage l'une de l'autre de manière à obturer sensiblement l'ouverture d'introduction, et
- une étape d'emboîtement dans laquelle on emboîte le bâton dans le réceptacle au moyen d'une dépression crée dans le réceptacle par une pompe à vide.

Grâce à la dépression, l'effort à exercer sur l'extrémité du bâton destinée aux lèvres peut être réduit, voire supprimé. Au lieu d'être poussé, le bâton de rouge à lèvres est partiellement ou totalement aspiré par la dépression créée par dans le réceptacle. La rétention du bâton dans le réceptacle est assurée par l'ajustement de l'ouverture d'introduction. Ainsi, il est possible d'assembler des bâtons de rouges à lèvres constitués de pâtes plus molles qu'avec les procédés de fixation traditionnels, ou d'assembler des bâtons ayant des extrémités profilées plus fragiles, ou bien d'obtenir une meilleure régularité avec des bâtons à pâtes plus dures.

Avantageusement, le réceptacle comprend un fond contre lequel le raisin vient en butée par aspiration.

Avantageusement, le procédé comprend une étape de moulage dans laquelle on moule le bâton de rouge à lèvres, l'étape d'emboîtement étant précédée d'une étape de démoulage d'une zone d'extrémité proximale du bâton.

Avantageusement, le bâton est fourni dans une enveloppe présentant une paroi déformable (l'enveloppe faisant par exemple partie d'un moule pour le bâton), et, simultanément à la création d'une dépression dans le réceptacle, on crée une dépression par une pompe à vide sur l'enveloppe pour libérer le bâton de celle-ci.

Avantageusement, on utilise un réceptacle présentant une zone intérieure communiquant avec l'extérieur par l'ouverture d'introduction et par un orifice, une paroi annulaire du réceptacle s'étendant entre l'ouverture d'introduction et l'orifice. Le procédé comprend :
- une étape de confinement d'une zone extérieure au réceptacle qui comprend l'orifice dans laquelle on raccorde de façon sensiblement étanche une enceinte à la paroi annulaire, l'ouverture d'introduction restant hors de l'enceinte et
- une étape de création d'une dépression dans l'enceinte pour que cette dépression se propage dans la zone intérieure via l'orifice.

Avantageusement, la paroi annulaire présente le même profil intérieur ajusté au bâton que l'ouverture d'introduction de sorte que le bâton est maintenu aligné dans l'axe d'introduction.

Dans une variante, l'étape d'emboîtement comprend une étape d'ajustement de la position du bâton de rouge à lèvres dans le réceptacle du distributeur en créant dans le réceptacle une surpression ou une dépression par rapport à la pression atmosphérique.

Selon un autre aspect, l'invention porte sur un procédé d'assemblage d'un distributeur de rouge à lèvres comprenant une étape de préassemblage du réceptacle dans un mécanisme d'actionnement du distributeur, un des procédés précités pour fixer le bâton de rouge à lèvres et, postérieurement à la fixation du bâton, une étape d'assemblage du mécanisme d'actionnement avec une coque enjoliveur.

Avantageusement, l'assemblage de la coque enjoliveur peut être réalisé hors de la machine de fixation. Cela permet de réduire les risques de rayures de la coque enjoliveur.

Selon encore un autre aspect, l'invention porte une machine pour fixer un bâton de rouge à lèvres dans un distributeur, le bâton comprenant une extrémité distale destinée aux lèvres, le distributeur comprenant un réceptacle présentant une ouverture d'introduction ajustée à une extrémité proximale du bâton. La machine comprend :
- un mécanisme d'amenée de l'ouverture d'introduction et l'extrémité proximale du bâton au voisinage l'une de l'autre de manière à obturer sensiblement l'ouverture d'introduction, et
- un dispositif de création d'une dépression dans le réceptacle de façon à emboîter le bâton dans le réceptacle.

Avantageusement, le dispositif de création d'une dépression dans le réceptacle comprend une enceinte reliée à pompe à vide et un dispositif de raccordement sensiblement étanche de l'enceinte au réceptacle du distributeur.

Dans une variante destinée à assembler des distributeurs comprenant un mécanisme d'actionnement (16), l'enceinte est apte à recevoir au moins en partie le mécanisme d'actionnement.

Dans une variante destinée à assembler des distributeurs comprenant un mécanisme d'actionnement équipé d'un corps dans lequel le réceptacle coulisse axialement entre une position rentrée et une position sortie, ledit corps étant ajusté au réceptacle en position sortie ; la machine comprend un dispositif de raccordement sensiblement étanche de l'enceinte avec le corps. Ainsi, le raccordement sensiblement étanche entre le réceptacle et l'enceinte passe par l'ajustement entre le réceptacle et le corps du mécanisme d'actionnement et par le raccordement sensiblement étanche de l'enceinte au corps du mécanisme.

Avantageusement, la machine comprend une station de moulage du bâton présentant une entretoise amovible destinée au moulage de l'extrémité proximale du bâton et un bras commandable d'extraction de l'entretoise amovible.

Avantageusement, la station de moulage comprend une paroi en matériau déformable délimitant une cavité de moulage, une cavité extérieure entourant la paroi déformable et un dispositif de production de vide dans la cavité extérieure.

### BREVE DESCRIPTION DES DESSINS :

La présente invention sera mieux comprise à l'étude de la description détaillée de quelques modes de réalisation pris à titre d'exemples nullement limitatifs et illustrés par les dessins annexés sur lesquels :
- La figure 1 est une coupe longitudinale d'une machine pour fixer un bâton de rouge à lèvres dans un distributeur, illustrée en position initiale après que le bâton ait été moulé.
- La figure 2 est une coupe longitudinale de la machine figure 1 après dégagement de l'entretoise de moulage de l'extrémité du bâton.
- La figure 3 est une coupe longitudinale de la machine de la figure 1 illustrant le transfert du bâton de rouge à lèvres de la station de moulage vers le distributeur.
- La figure 4 est une coupe longitudinale de la machine figure 1 en fin de cycle.

### DESCRIPTION DETAILLEE :

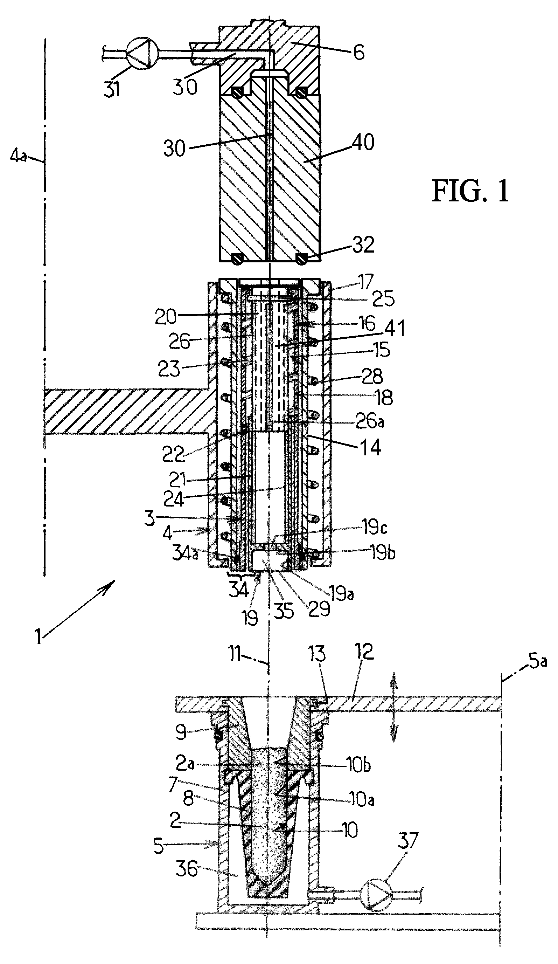

Comme illustré sur la figure 1, la machine 1 pour fixer un bâton de rouge à lèvres 2 dans un distributeur 3 comprend une station supérieure 4 tenant le distributeur 3 et une station de moulage 5 du bâton de rouge à lèvres 2 ainsi qu'un vérin, dont seule la tête 6 est représentée.

La station de moulage 5 comprend un bâti 7 dans lequel est logée une enveloppe comportant une paroi 8 en matériau déformable telle qu'un élastomère, notamment en silicone.

Une entretoise de moulage 9 est également logée dans le bâti 7 au-dessus de la paroi déformable 8. L'entretoise 9 et la paroi déformable 8 forment ensemble une cavité de moulage 10 dans laquelle est coulé un produit cosmétique constituant le bâton de rouge à lèvres 2. Le produit cosmétique remplit la totalité de la forme creuse intérieure 10a de la paroi déformable 8 ainsi que quelques millimètres dans un alésage 10b de l'entretoise 9.

Avantageusement, la machine 1 peut comprendre une pluralité de stations supérieures 4 montées sur une machine rotative autour d'un axe 4a et une pluralité de stations de moulage 5 montées sur une machine rotative d'axe 5a parallèle et distant de l'axe 4a. Ainsi, il est possible d'introduire le distributeur 3 dans une station supérieure 4 avant que celle-ci soit alignée avec une des stations de moulage 5 le long d'un axe 11.

Un bras d'extraction 12 est mobile axialement de manière à pouvoir extraire l'entretoise 9 du bâti 7 et ainsi dégager l'extrémité supérieure 2a du bâton de rouge à lèvres 2.

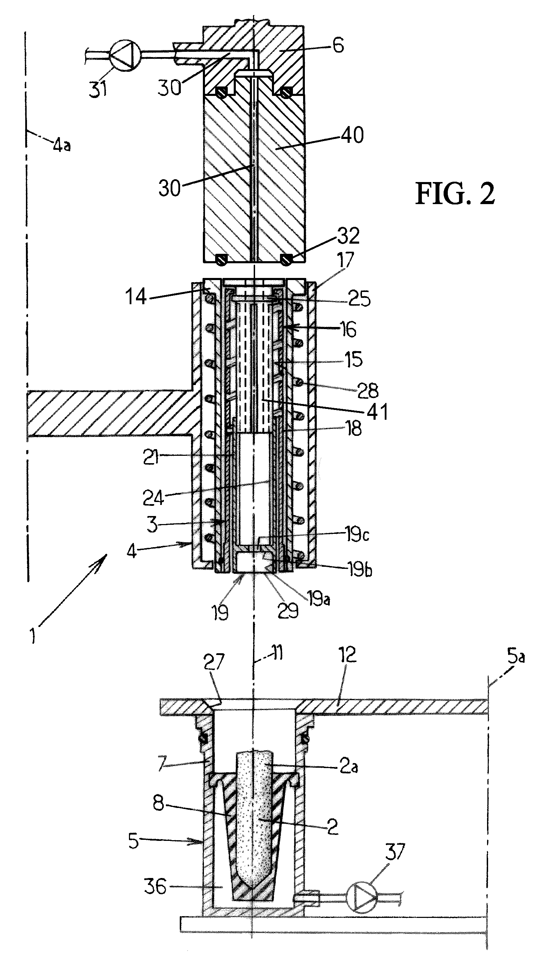

Comme illustré aux figures 1 et 2, le bras d'extraction 12 peut être un disque pivotant autour de l'axe 5a et mobile axialement de manière à soulever l'entretoise 9 par sa collerette 13. Le bras d'extraction 12 peut être pivoté d'une portion d'angle de manière qu'un orifice 27 du disque laisse libre accès à l'extrémité supérieure 2a du bâton de rouge à lèvres 2.

La station de moulage 5 comprend également une cavité extérieure 36 s'étendant à l'extérieur de l'enveloppe à paroi déformable 8 et reliée à une pompe à vide 37.

On va maintenant décrire la station supérieure 4. Celle-ci est équipée d'une tête de tenue 14 coulissant axialement dans un support 17 sous l'action de la tête de vérin 6 et d'un ressort de rappel 28. La tête de tenue 14 présente un logement dans laquelle est disposé un mécanisme d'actionnement 16 du distributeur 3. La tête de vérin 6 peut être équipé d'une entretoise 40 permettant à la station supérieure 4 de s'adapter à différentes hauteurs de mécanisme d'actionnement 16.

Le mécanisme d'actionnement 16 comprend un corps 18 du distributeur, un réceptacle 19 et un moyeu d'entraînement 20. Le réceptacle 19 comprend une paroi annulaire 19a et un fond 19b dans lequel est ménagé un orifice 19c. Le réceptacle 19 comprend également une jupe arrière 21 présentant un ergot radialement extérieur 22 coulissant dans une rainure hélicoïdale 23 du corps 18 de distributeur. La rainure hélicoïdale 23 peut traverser la paroi du corps 18 ou bien être borgne. La jupe arrière 21 comprend également des nervures 24 s'étendant longitudinalement le long de la jupe arrière 21 et faisant saillie radialement vers l'intérieur de la jupe arrière 21. Le moyeu d'entraînement 20 présente une rainure circulaire arrière 25 coopérant avec le corps 18 de distributeur de manière à être mobile en rotation et immobile en translation par rapport au corps 18 de distributeur. Le moyeu d'entraînement 20 comprend également des rainures longitudinales 26 ajustées aux nervures longitudinales 24 de la jupe arrière 21. Ainsi, lorsque le moyeu d'entraînement 20 est entraîné en rotation, le réceptacle 19 se déplace en hélice le long de la rainure hélicoïdale 23. Cela permet à la paroi annulaire 19a et au fond 19b de passer d'une position dite « sortie » illustrée sur les figures à une position « rentrée ».

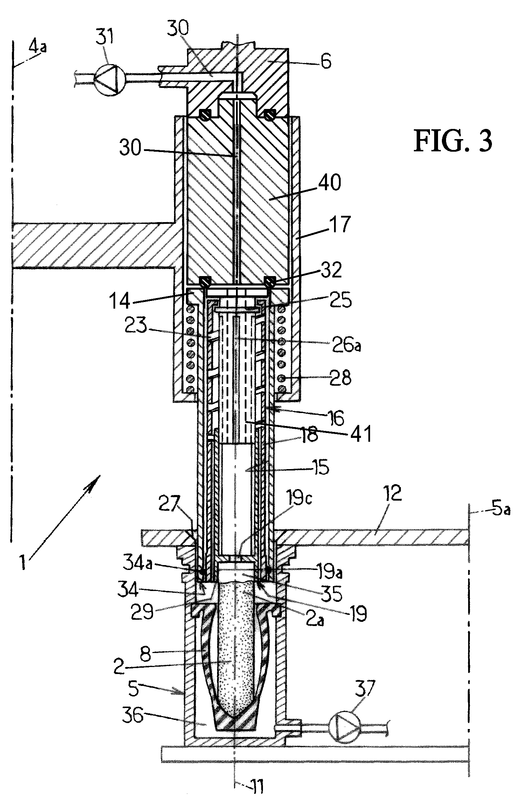

Comme illustré en figure 3, la station supérieure 4 et la station de moulage 5 constituent ensemble un mécanisme d'amenée (4-5) de l'ouverture d'introduction (29) et l'extrémité proximale (2a) du bâton (2) au voisinage l'une de l'autre de manière à obturer sensiblement l'ouverture d'introduction (29). En effet, la tête de vérin 6 et l'entretoise d'adaptation 40 descendent, plaquent contre le sommet de la tête de tenue 14, entraînent celle-ci vers le bas en comprimant le ressort de rappel 28.

La tête de vérin 6 et l'entretoise d'adaptation 40 comprennent un canal 30 relié à une pompe à vide 31 et un joint d'étanchéité torique 32 entoure le canal 30.

Dans une variante, le joint d'étanchéité 32 peut assurer l'étanchéité entre l'entretoise d'adaptation 40 et la tête de tenue 14. La tête de tenue 14, obturée par l'entretoise 40, constitue alors une enceinte 15 contenant la majeure partie du mécanisme 16 et en particulier la majeure partie du réceptacle 19.

La tête de tenue 14 comprend un dispositif de raccordement 34 sensiblement étanche de l'enceinte 15 au réceptacle 19. Le dispositif de raccordement 34 comprend un joint torique 34a s'étendant entre la tête de tenue 14 et le corps 18 de distributeur ainsi qu'un ajustement entre la paroi annulaire 19a du réceptacle 19 et le corps 18 du distributeur 3. Ainsi, une dépression créée par la pompe à vide 31 se propage via le canal 30 à l'enceinte 15. La dépression dans l'enceinte 15 se propage à son tour à travers les rainures hélicoïdales 23 et une rainure 26a dans le moyeu d'entraînement 20 jusqu'à l'orifice 19c.

Dans une autre variante, le mécanisme 16 est comme un tube étanche avec un orifice central 41. Le joint d'étanchéité 32 peut alors être plaqué sur le sommet du mécanisme d'actionnement 16. Dans ce cas, l'enceinte 15 recevant la majeure partie du réceptacle 19 est constituée par le corps 18 étanche. De manière analogue à la variante précédente, la dépression du canal 30 se propage à travers l'orifice central 41 du mécanisme d'actionnement 16 jusqu'à l'orifice 19c.

Dans l'une ou l'autre des variante, la paroi annulaire 19a du réceptacle 19 présente une extrémité libre circulaire définissant une ouverture 29 du récepteur 19 qui est destinée à l'introduction du bâton 2 dans le réceptacle 19. La tête de vérin 6, la tête de tenue 14 et le mécanisme d'actionnement 16 avec son réceptacle 19 en position « sortie », descendent jusqu'à ce que l'ouverture 29 arrive au voisinage de l'extrémité supérieure 2a du bâton de rouge à lèvres 2. Cette position correspond à la position de transfert du bâton 2, de la station de moulage 5 vers le réceptacle 19.

Lorsque la tête de tenue 14 est en position de transfert, l'extrémité supérieure 2a du bâton de rouge à lèvres 2 isole de l'extérieur une zone 35 à l'intérieur du réceptacle 19 qui communique avec la pompe à vide 31 par l'orifice 19c.

Par ailleurs, la pompe à vide 37 de la station de moulage 5 crée une dépression dans la cavité extérieure 36. La paroi déformable 8 de l'enveloppe se décolle du bâton de rouge à lèvres 2 et libère le bâton 2. Ainsi, la dépression créée dans la zone intérieure 35 du réceptacle 19 permet d'aspirer le bâton de rouge à lèvres 2. Le bâton de rouge à lèvres peut être aspiré jusqu'à venir en butée sur le fond 19b du réceptacle 19.

Les dépressions créées dans le réceptacle 19 et dans la cavité extérieure 36 peuvent avoir lieu l'une avant l'autre, et dans n'importe quel ordre, mais présentent au moins une période où, simultanément, la dépression dans le réceptacle 19 aspire le bâton 2 et la dépression dans la cavité extérieure 36 libère le bâton 2, permettant ainsi le transfert de la station 5 au distributeur 3.

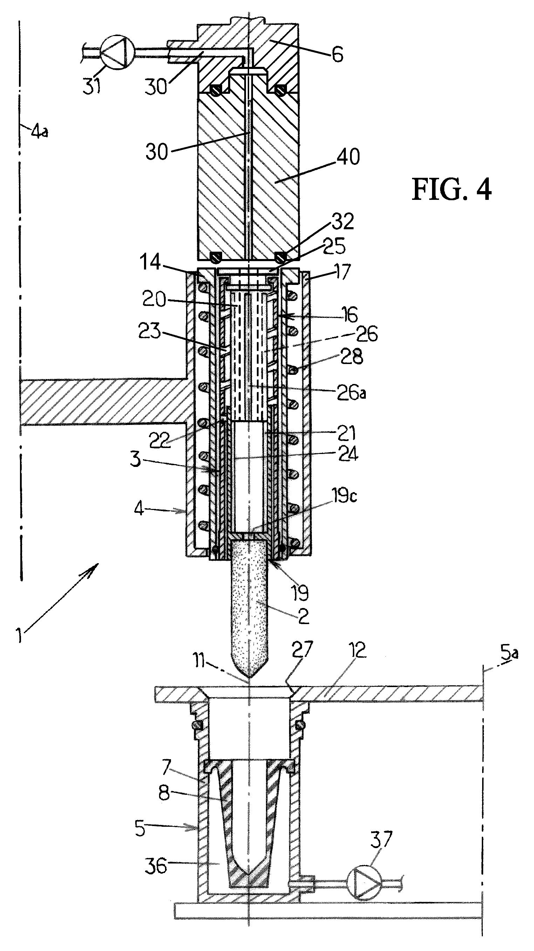

Comme illustré en figure 4, la tête de tenue 14 remonte dans une position où le distributeur 3 auquel a été fixé le bâton de rouge à lèvres 2 peut être déchargé de la station supérieure 4.

On comprend que l'invention peut être mise en oeuvre avec tout type de station 5 qui est apte à tenir le bâton de rouge à lèvres 2, à dégager l'extrémité 2a du bâton et à libérer le bâton de rouge à lèvres 2 lorsque l'ouverture d'introduction 29 du réceptacle 19 est sensiblement obturée par l'extrémité 2a.

Avantageusement, une coque enjoliveur non illustrée peut être assemblée au mécanisme d'actionnement 16 en s'accrochant au moyeu d'entraînement 20. Cette dernière étape du procédé d'assemblage du distributeur de rouge à lèvres peut être réalisée loin de la machine de fixation 1 précédemment décrite. Cela permet d'éviter les rayures et de gérer les stocks à la demande.

Le procédé de la machine de fixation 1 est particulièrement avantageux pour des bâtons de rouge à lèvres 2 constitués d'une pâte cosmétique molle. Il peut également être utilisé avec des pâtes cosmétiques de dureté habituelle mais ayant un profil porté aux lèvres particulièrement fragile.

Dans une variante du procédé de fixation, la tête de tenue 14 peut descendre jusqu'à ce que l'ouverture 29 du réceptacle 19 affleure la paroi silicone 8 ou jusqu'à ce que l'extrémité 2a du bâton de rouge à lèvres 2 arrive au fond 19b du réceptacle 19. La pompe à vide 31 peut n'être activée que lorsque l'emmanchement traditionnel déforme le bâton de rouge à lèvres 2, en particulier déforme le profil de l'extrémité portée aux lèvres.

Dans une autre variante, la machine 1 peut être utilisée pour ajuster la position du bâton de rouge à lèvres dans le réceptacle 19 du distributeur en créant dans le réceptacle 19 une surpression ou une dépression par rapport à la pression atmosphérique. Dans cette variante, le canal 30 ou l'enceinte 15 peuvent être reliés également à un générateur d'air comprimé (non représenté) via une vanne trois voies pilotable.

La machine 1 peut être utilisée avec n'importe quel mécanisme d'actionnement ayant un orifice 19c débouchant dans la zone intérieure 35 du réceptacle et non obstrué au début de l'introduction du bâton 2.

La machine de fixation et de moulage d'un raisin peut comporter une seule station supérieure 4 et/ou une seule station de moulage.

Dans une variante, la pompe à vide 31 peut être reliée directement à l'enceinte 15.

## Revendications

1. Procédé pour fixer un bâton de rouge à lèvres (2) dans un distributeur (3), le bâton comprenant une extrémité distale destinée aux lèvres, le distributeur comprenant un réceptacle (19) présentant une ouverture d'introduction (29) ajustée à une extrémité proximale du bâton (2), le procédé comprenant :
- une étape d'amenée dans laquelle on amène l'ouverture d'introduction (29) et l'extrémité proximale (2a) du bâton (2) au voisinage l'une de l'autre de manière à obturer sensiblement l'ouverture d'introduction (29), et
- une étape d'emboîtement dans laquelle on emboîte le bâton dans le réceptacle au moyen d'une dépression créée dans le réceptacle (19) par une pompe à vide (31).

2. Procédé selon la revendication 1, comprenant une étape de moulage dans laquelle on moule le bâton de rouge à lèvres (2), l'étape d'emboîtement étant précédée d'une étape de démoulage d'une zone d'extrémité proximale (2a) du bâton (2).

3. Procédé selon la revendication 1 ou 2 dans lequel on fournit le bâton dans une paroi déformable (8) et dans lequel, simultanément à la création d'une dépression dans le réceptacle, on libère le bâton de la paroi déformable (8) par une autre pompe à vide(37).

4. Procédé selon l'une des revendications 1 à 3, dans lequel on utilise un réceptacle (19) présentant une zone intérieure (35) communiquant avec l'extérieur par l'ouverture d'introduction (29) et par un orifice (19c), une paroi annulaire (19a) du réceptacle s'étendant entre l'ouverture d'introduction (29) et l'orifice (19c), le procédé comprenant :
- une étape de confinement d'une zone extérieure au réceptacle qui comprend l'orifice (19c) dans laquelle on raccorde de façon sensiblement étanche une enceinte (15) à la paroi annulaire, l'ouverture d'introduction (29) restant hors de l'enceinte (15) et
- une étape de création d'une dépression dans l'enceinte (15) pour que cette dépression se propage dans la zone intérieure (35) via l'orifice (19c).

5. Procédé selon l'une des revendications précédentes, dans lequel l'étape d'emboîtement comprend une étape d'ajustement de la position du bâton de rouge à lèvres (2) dans le réceptacle (19) du distributeur en créant dans le réceptacle (19) une surpression ou une dépression par rapport à la pression atmosphérique.

6. Procédé d'assemblage d'un distributeur (3) de rouge à lèvres comprenant une étape de préassemblage du réceptacle (19) dans un mécanisme d'actionnement (16) du distributeur (3), une étape de fixation du bâton (2) de rouge à lèvres selon l'une des revendications précédentes et, postérieurement à la fixation du bâton, une étape d'assemblage du mécanisme d'actionnement avec une coque enjoliveur.

7. Machine pour fixer un bâton (2) de rouge à lèvres dans un distributeur (3), le bâton comprenant une extrémité distale destinée aux lèvres, le distributeur comprenant un réceptacle (19) présentant une ouverture d'introduction (29) ajustée à une extrémité proximale du bâton (2), la machine comprenant :
- un mécanisme d'amenée (4-5) de l'ouverture d'introduction (29) et de l'extrémité proximale (2a) du bâton (2) au voisinage l'une de l'autre de manière à obturer sensiblement l'ouverture d'introduction (29), et
- un dispositif de création d'une dépression dans le réceptacle de façon à emboîter le bâton (2) dans le réceptacle (19), ledit dispositif comprenant une pompe à vide.

8. Machine selon la revendication 7, dans laquelle le dispositif de création d'une dépression dans le réceptacle comprend une enceinte (15) reliée à la pompe à vide (31) et un dispositif de raccordement (34) sensiblement étanche de l'enceinte (15) au réceptacle (19) du distributeur (3).

9. Machine selon la revendication 8, destinée à assembler le distributeur comprenant un mécanisme d'actionnement (16), dans laquelle l'enceinte (15) est apte à recevoir au moins en partie le mécanisme d'actionnement (16).

10. Machine selon la revendication 8 ou 9, destinée à assembler le distributeur comprenant un mécanisme d'actionnement (16) équipé d'un corps (18) dans lequel le réceptacle (19) coulisse axialement entre une position rentrée et une position sortie, ledit corps (18) étant ajusté au réceptacle (19) en position sortie ; la machine comprenant un dispositif de raccordement (34a) sensiblement étanche de l'enceinte (15) avec le corps (18).

11. Machine selon l'une des revendications 7 à 10, comprenant une station de moulage (5) du bâton (2) présentant une entretoise (9) amovible destinée au moulage de l'extrémité (2a) proximale du bâton (2) et un bras (12) commandable d'extraction de l'entretoise amovible (9).

12. Machine selon la revendication 11, dans laquelle la station de moulage (5) comprend une paroi (8) en matériau déformable délimitant une cavité de moulage (10), une cavité extérieure (36) entourant la paroi déformable (8) et un dispositif (37) de production de vide dans la cavité extérieure (36).

## Patentansprüche

1. Verfahren zum Befestigen eines Lippenstifts (2) an einem Spender (3), wobei der Stift ein lippenseitiges distales Ende aufweist und der Spender eine Aufnahme (19) mit einer geeigneten Einführungsöffnung (29) zum Einführen eines proximalen Endes des Stifts (2) aufweist, wobei das Verfahren aufweist:
- einen Anordnungsschritt, in welchem die Einführungsöffnung (29) und das proximale Ende (2a) des Stifts (2) aneinander angrenzend angeordnet werden, so dass die Einführungsöffnung (29) im Wesentlichen verschlossen ist, und
- einen Einsetzungsschritt, in welchem der Stift mit Hilfe eines Unterdrucks, der von einer Vakuumpumpe (31) in der Aufnahme (19) erzeugt wird, in die Aufnahme eingesetzt wird.

2. Verfahren nach Anspruch 1, mit einem Formgebungsschritt, in welchem der Lippenstift (2) einer Formgebung unterzogen wird, wobei dem Einsetzungsschritt ein Formwerkzeugabnahmeschritt vorausgeht, in welchem das Formwerkzeug von einem Bereich des proximalen Endes (2a) des Stifts (2) abgenommen wird.

3. Verfahren nach Anspruch 1 oder 2, in welchem der Stift in einer verformbaren Wand (8) zugeführt wird und in welchem gleichzeitig mit der Erzeugung eines Unterdrucks in der Aufnahme der Stift mit Hilfe einer anderen Vakuumpumpe (37) von der verformbaren Wand (8) befreit wird.

4. Verfahren nach einem der Ansprüche 1 bis 3, in welchem eine Aufnahme (19) verwendet wird, die einen Innenbereich (35) aufweist, der über die Einführungsöffnung (29) und über eine Öffnung (19c) eine Verbindung nach außen hat, wobei sich zwischen der Einführungsöffnung (29) und der Öffnung (19c) eine ringförmige Wand (19a) der Aufnahme erstreckt, wobei das Verfahren aufweist:
- einen Einschließungsschritt zum Einschließen eines außerhalb der Aufnahme liegenden Bereichs, der die Öffnung (19c) aufweist, wobei in dem Einschließungsschritt die ring-förmige Wand auf eine im Wesentlichen dichte Weise mit einer Kammer (15) verbunden wird, wobei die Einführungsöffnung (29) außerhalb der Kammer (15) bleibt, und
- einen Erzeugungsschritt zum Erzeugen eines Unterdrucks in der Kammer (15), so dass sich der Unterdruck über die Öffnung (19c) in den Innenbereich (35) ausbreitet.

5. Verfahren nach einem der vorstehenden Ansprüche, in welchem der Einsetzungsschritt einen Anpassungsschritt aufweist, in welchem die Position des Lippenstifts (2) in der Aufnahme (19) des Spenders durch Erzeugen eines Überdrucks oder eines Unterdrucks, bezogen auf den Atmosphärendruck, angepasst wird.

6. Verfahren zum Zusammenfügen eines Lippenstift-Spenders (3), das aufweist: einen Schritt zum Vormontieren der Aufnahme (19) an einem Betätigungsmechanismus (16) des Spenders (3), einen Schritt zum Befestigen des Lippenstifts (2) nach einem der vorstehenden Ansprüche und im Anschluss an das Befestigen des Lippenstifts einen Schritt zum Zusammenfügen des Betätigungsmechanismus mit einer Zierhülle.

7. Maschine zum Befestigen eines Lippenstifts (2) an einem Spender (3), wobei der Stift ein lippenseitiges distales Ende aufweist und der Spender eine Aufnahme (19) mit einer geeigneten Einführungsöffnung (29) zum Einführen eines proximalen Endes des Stifts (2) aufweist, wobei die Maschine aufweist:
- einen Anordnungsmechanismus (4-5) zum aneinander angrenzenden Anordnen der Einführungsöffnung (29) und des proximalen Endes (2a) des Stifts (2), so dass die Einführungsöffnung (29) im Wesentlichen verschlossen ist, und
- eine Vorrichtung zum Erzeugen eines Unterdrucks in der Aufnahme, um den Stift (2) in die Aufnahme (19) einzusetzen, wobei die Vorrichtung eine Vakuumpumpe aufweist.

8. Maschine nach Anspruch 7, wobei die Vorrichtung zum Erzeugen eines Unterdrucks in der Aufnahme aufweist: eine mit der Vakuumpumpe (31) verbundene Kammer und eine Vorrichtung zum im Wesentlichen dichten Verbinden (34) der Kammer (15) mit der Aufnahme (19) des Spenders (3).

9. Maschine nach Anspruch 8, vorgesehen zum Zusammenfügen des Spenders, der einen Betätigungsmechanismus (16) aufweist, wobei die Kammer (15) den Betätigungsmechanismus (16) zumindest teilweise aufnehmen kann.

10. Maschine nach Anspruch 8 oder 9, vorgesehen zum Zusammenfügen des Spenders, der einen Betätigungsmechanismus (16) aufweist, der mit einem Körper (18) versehen ist, in welchem die Aufnahme (19) axial zwischen einer eingefahrenen Position und einer ausgefahrenen Position gleitet, wobei in der ausgefahrenen Position der Körper (18) mit der Aufnahme (19) ausgerichtet ist; wobei die Maschine eine Vorrichtung zum im Wesentlichen dichten Verbinden (34a) der Kammer (15) mit dem Körper (18) aufweist.

11. Maschine nach einem der Ansprüche 7 bis 10, mit einer Formgebungsstation (5) zum Formen des Stifts (2), wobei die Station ein bewegliches Zwischenstück (9) zum Formen des proximalen Endes (2a) des Stifts (2) und einen steuerbaren Arm (12) zum Abnehmen des beweglichen Zwischenstücks (9) aufweist.

12. Maschine nach Anspruch 11, wobei die Formgebungsstation (5) aufweist: eine aus einem verformbaren Material bestehende und einen Formgebungshohlraum (10) begrenzende Wand (8), um welche sich ein äußerer Hohlraum (36) erstreckt, und eine in dem äußeren Hohlraum (36) angeordnete Unterdruckerzeugungsvorrichtung (37).

## Claims

1. Method for attaching a stick (2) of lipstick to a dispenser (3), the stick comprising a distal end intended for the lips, the dispenser comprising a receptacle (19) having an insertion opening (29) adjusted to fit a proximal end of the stick (2), the method comprising:
- a moving step in which the insertion opening (29) and the proximal end (2a) of the stick (2) are brought adjacent to one another so that the insertion opening (29) is substantially blocked, and
- a nesting step during which the stick is nested in the receptacle due to a negative pressure created inside the receptacle (19) by a vacuum pump (31).

2. Method as claimed in claim 1, comprising a moulding step in which the stick (2) of lipstick is moulded, the nesting step being preceded by a step of unmoulding a proximal end region (2a) of the stick (2).

3. Method as claimed in claim 1 or 2 wherein the stick is supplied within a deformable wall (8), and wherein, and wherein, simultaneously with establishing a negative pressure inside the receptacle, the stick is released from the deformable wall (8) by means of another vacuum pump (37).

4. Method as claimed in one of claims 1 to 3, wherein a receptacle (19) having an internal region (35) communicating with the outside via the insertion opening (29) and via an orifice (19c) is used, an annular wall (19a) of the receptacle extending between the insertion opening (29) and the orifice (19c), the method comprising:
- a step of confining a region outside the receptacle incorporating the orifice (19c) during which a chamber (15) is connected to the annular wall in a substantially fluid-tight manner, the insertion opening (29) remaining outside the chamber (15) and
- a step of creating a negative pressure in the chamber (15) so that this negative pressure is propagated into the internal region (35) via the orifice (19c).

5. Method as claimed in one of the preceding claims, wherein the nesting step comprises a step of adjusting the position of the stick (2) of lipstick in the receptacle (19) of the dispenser by creating inside the receptacle (19) an over-pressure or negative pressure relative to the atmospheric pressure.

6. Method of assembling a lipstick dispenser comprising a step of pre-assembling the receptacle (19) in an actuator mechanism (16) of the dispenser (3), a step of attaching the stick (2) of lipstick as claimed in one of the preceding claims and, after attaching the stick, a step of assembling the actuator mechanism with a decorative shell.

7. Machine for attaching a stick (2) of lipstick to a dispenser (3), the stick comprising a distal end intended for the lips, the dispenser comprising a receptacle (19) having an insertion opening (29) adjusted to fit a proximal end of the stick (2), the machine comprising:
- a moving mechanism (4 - 5) for bringing the insertion opening (29) and the proximal end (2a) of the stick (2) adjacent to one another so that the insertion opening (29) is substantially blocked, and
- a device for creating a negative pressure inside the receptacle so as to nest the stick (2) inside the receptacle (19), said device comprising a vacuum pump.

8. Machine as claimed in claim 7, wherein the device for generating a negative pressure inside the receptacle comprises a chamber (15) connected to the vacuum pump (31) and a device (34) for connecting the chamber (15) to the receptacle (19) of the dispenser (3) in a substantially fluid-tight manner.

9. Machine as claimed in claim 8, intended for assembling the dispenser comprising an actuator mechanism (16), the chamber (15) being capable of receiving at least part of the actuator mechanism (16).

10. Machine as claimed in claim 8 or 9, intended for assembling the dispenser comprising an actuator mechanism (16) equipped with a body (18) inside which the receptacle (19) slides axially between a retracted position and an extracted position, said body (18) being adjusted to fit the receptacle (19) in the extracted position, the machine comprising a device (34a) for connecting the chamber (15) to the body (18) in a substantially fluid-tight manner.

11. Machine as claimed in one of claims 7 to 10, comprising a station (5) for moulding the stick (2) having a removable spacer (9) intended for moulding the proximal end (2a) of the stick (2) and a controllable arm (12) for extracting the removable spacer.

12. Machine as claimed in claim 11, wherein the moulding station (5) comprises a wall (8) of deformable material bounding a mould cavity (10), an outer cavity (36) surrounding the deformable wall (8) and a device (37) for creating a vacuum in the outer cavity (36).
